Europäisches Patentamt

European Patent Office

Office européen des brevets

(11) Publication number: **0 260 793**
**A2**

## EUROPEAN PATENT APPLICATION

(21) Application number: 87306421.6

(51) Int. Cl.⁴: **G06F 13/42**

(22) Date of filing: 20.07.87

The title of the invention has been amended (Guidelines for Examination in the EPO, A-III, 7.3).

(30) Priority: 24.07.86 GB 8618060
15.07.87 GB 8716705

(43) Date of publication of application:
23.03.88 Bulletin 88/12

(84) Designated Contracting States:
BE DE FR IT LU NL SE

(71) Applicant: GEC AVIONICS LIMITED
Airport Works
Rochester Kent ME1 2XX(GB)

(72) Inventor: Blackmore, Kevin Daryl
41A Wenham Drive
Westcliff-on-Sea Essex SSO 9BJ(GB)
Inventor: Walker, Adrian William
5 London Road
Crays Hill Billericay Essex CM11 2UR(GB)

(74) Representative: Tolfree, Roger Keith
GEC p.l.c. Central Patent Department
Chelmsford Office Marconi Research Centre
West Hanningfield Road
Great Baddow Chelmsford Essex CM2
8HN(GB)

(54) Bidirectional data bus.

(57) A bus arrangement which is particularly suitable for use with systems involving transputers is disclosed, which bus is a two wire bus connected to the one pair of the INMOS link connections on a transputer. Spur lines are taken off the bus to other transputers in a system, which transputers may form part of physically separate circuits or modules. These spurs are fed through link selectors which examine a part of messages present on the line to decide whether that message is intended for that particular transputer. If so, the link selector allows messages to be passed to and from that particular transputer.

Fig./

## Bus

This invention relates to a bus of the type which provides a communication channel between electronic circuits, and in particular it relates to a bus for providing a bi-directional communication channel between a plurality of transputers or between a plurality of separate modules or units at least some of which include a transputer.

A transputer is an integrated circuit manufactured by INMOS Limited and is essentially a micro computer with its own local memory and with standard links for connecting one transputer to another transputer in a network. A transputer includes a number, usually four, of standard links, known as INMOS links, each comprising two wires and providing two unidirectional communication channels. These links have been designed to implement the standard inter-transputer communication protocol between transputers mounted in a circuit, which may be connected in a grid like array fashion. The normal inter-transputer protocol does not allow one transputer to communicate with more than one other transputer over one link. Hence, current architectures linking transputers in an array are limited to each transputer being linked to up to four others. Furthermore, the standard links have only been envisaged as links between transputers mounted close to each other on the same circuit.

For linking physically separate modules or circuits some form of bus arrangement must be used. In conventional micro computer architectures, including conventional transputer micro computer architectures, these bus links are complex and involve many wires, generally in the form of ribbon cables, to communicate between the separate circuit boards or modules. The standard VME bus for instance uses a 96 wire connector. Clearly, the greater number of wires in a link the higher the chances of an error occurring and also accurate timing signals must be provided.

According to the present invention in a first aspect there is provided a method for bidirectional communication between physically separate electronic circuits, or modules, wherein the standard links provided by a transputer are used as communication paths between the separate circuits such that there is essentially a two wire connection between each circuit or module.

In a second aspect of the present invention there is provided apparatus for providing bi-directional communication between a plurality of transputers, comprising a two wire bus; connections via respective buffers between each wire of the bus and the link in and link out connections of one pair of INMOS links of each transputer; and decoding means at each transputer adapted to compare at least part of any data present on the bus with a known address of that transputer and, if the address received is that of the transputer, to enable the buffer to allow the transputer to transmit and receive data.

Preferably, the decoding means comprises a link adapter arranged to convert data from serial form on a two wire bus into parallel form, and a comparator adapted to compare the parallel data from the link adapter with a known address for that transputer.

The term "link adapter" is one known in the art and is a device such as that known as INMOS device COO1, COO2 or CO12 which are normally adapted to provide an interface between an INMOS serial link and a micro processor system bus, via, for example, an 8 bit bi-directional interface.

In addition to the link in and link out connections a transputer also includes event request and event acknowledgement connections. These may be utilised in preferred embodiments of the invention, in which the first transputer is arranged to generate messages of which the first chosen number of bytes represent the address for which that message is intended. The comparator at each transputer can be fed an appropriate signal via the event request and event acknowledgement connections at appropriate times when it is required to scan the message to compare the address bytes. Alternatively, other methods may be used to instruct the decoder when to begin decoding part or the whole of a message.

The transputers may each be associated with a physically separate module and circuit and, in a preferred embodiment, up to 8 separate modules may be connected by the two wire bus as described. The size of the system may however be extended if necessary.

Embodiments of the invention will now be described by way of example only with reference to the accompanying drawings in which:

Figure 1 shows schematically a bus arrangement according to the present invention.

Figure 2 shows in more detail the connection of one transputer in the network to the bus.

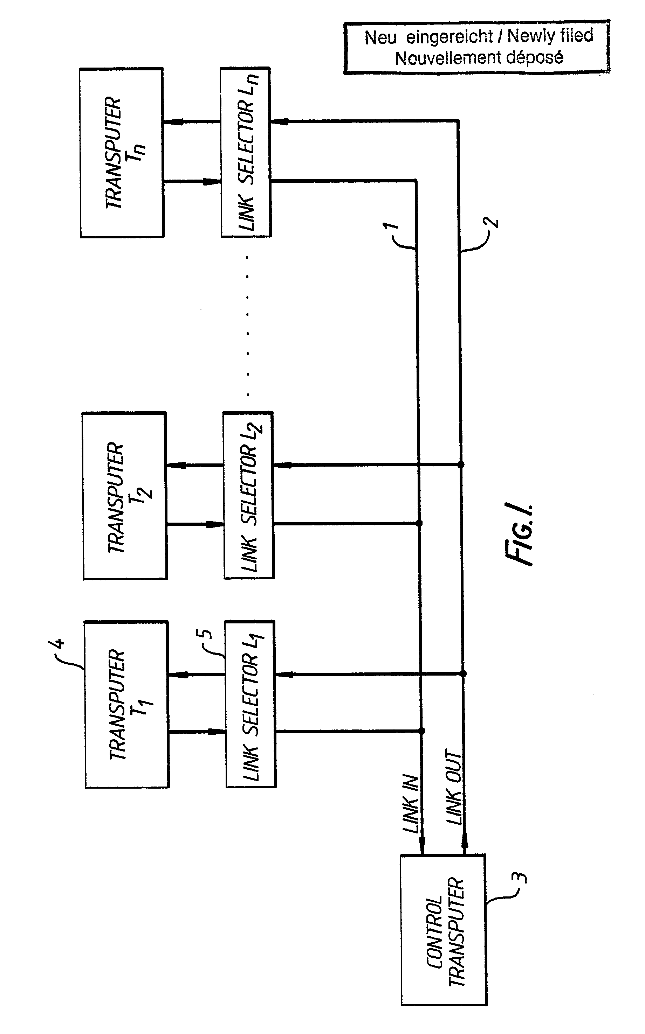

Referring to Figure 1, there is shown - schematically the general bus arrangement according to the present invention which is essentially a two wire bus 1 and 2 connected to the link in and link out pins respectively of a control transputer 3, such as INMOS device number IMS T414. The control transputer 3 may be part of a control module or circuit for transmitting or receiving messages to or from other physically separate modules. Outputs are taken from the bus line to respective

transputers 4 (T$_1$ to T$_n$). Typically, each transputer will form part of a separate module and in preferred embodiments there may be up to eight such modules, the input or output to each of which is controlled by the respective transputer. The links to the respective transputers are fed through respective link selectors 5 (L$_1$ to L$_n$). These link selectors function, in a manner which will become clear, to decide, for each message which is present on the bus, whether that message is intended for receipt by that particular transputer. If so then the link selector serves to open a communication channel which allows that particular transputer to receive or transmit data. Normally the link selectors present a high impedance path which functions to close down any communication channels so that the appropriate respective transputer can not transmit or receive data. In this manner, the INMOS links associated with each transputer can be used according to the normal INMOS link protocol in which one transputer may only communicate with one other transputer over one link but with the important difference that communication may be freely switched between transputers and hence between modules or units as appropriate.

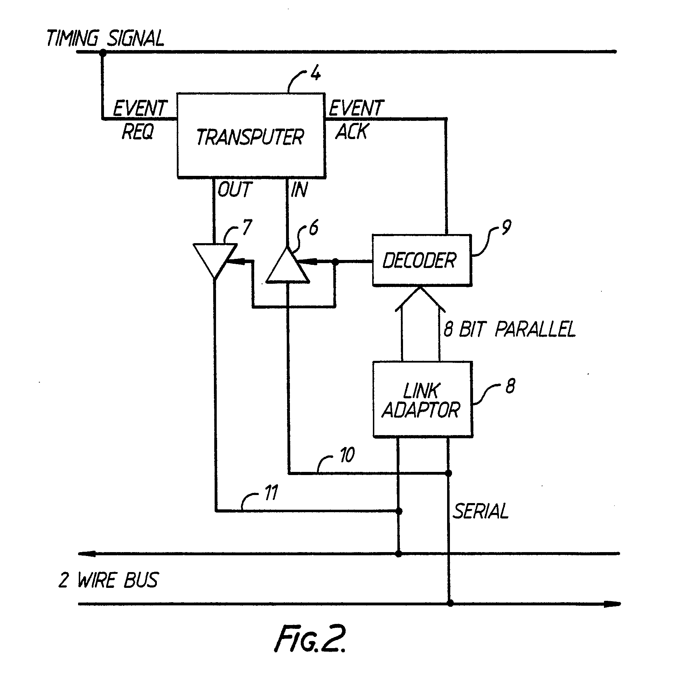

Figure 2 shows more clearly how the link selector works for a particular transputer module. Connections from the two wire bus are fed via buffers 6 and 7 to the link in and link out inputs of transputer 4. A parallel path is also taken from the bus through a link adapter 8 and a decoder 9 which may comprise merely a comparator circuit. The link adapter can be one of the devices manufactured by INMOS limited and may be for example one of INMOS device numbers IMS COO1, COO2 or CO12. Essentially these devices are used in embodiments of the present invention to convert from serial data along the two wire standard INMOS link into eight bit parallel data which would, in more conventional architectures be applied to a parallel bus line or as an input to a micro processor or other such peripheral. The parallel data is in fact, in this embodiment, input to the decoder 9.

The decoder is programmed or otherwise supplied with details of an address which is unique to that particular module. The decoder provides a comparison function upon certain chosen portions of any message present on the bus at any time. If a message is intended for that particular module then the decoder will read the correct address, decide that the module has been selected and serve to enable buffers 6 and 7 such that communication can occur over lines 10 and 11. Normally the buffers 6 and 7 are disabled such that no data can flow along lines 10 and 11 and all data is routed to adapter 8 and decoder 9 which present a high impedance path to the bus and hence block the flow of data to or from transputer 4.

A suitable communication protocol for communication between the control transputer 3 and any one of the other transputers within the network is to transmit messages from the control transputer, which messages typically comprise 32 words, made up of valid data followed by dummy data if the length of real data is insufficient to fill the message. The first byte of the message can define the address of the receiving transputer and the number of valid bytes in the message. For a system having eight transputers linked to the control transputer, bits $D_0$-$D_2$ may define the receiving transputer and bits $D_3$-$D_7$ can define the number of valid data bytes in the message.

In these circumstances, the link selectors are programmed to examine the 1st, 33rd, 65th.....n x 32 + 1 byte being transmitted along the bus, and then to decide by comparing these bytes against known programmed addresses within the selector whether to remain high impedance or whether to open the communication path for the next 31 bytes before returning to a high impedance-bus monitoring state.

In this particular embodiment, since the link selectors must only be programmed to examine particular bytes within the message, an additional timing line 12 is preferred along with the bus in order to provide synchronisation signals to the decoder 9 and to tell it precisely when to examine a particular byte. Outputs can be taken from the timing line into the event request pin of a transputer and an output taken from the event acknowledgement pin to the decoder. The last mentioned pins are specifically designed for timing applications such as this.

However, some embodiments of the present invention will not need the additional timing sync line since messages could for example be transmitted in pulses with messages could for example be transmitted in pulses with gaps between the pulses which serve to set the decoders or alternatively any other suitable arrangement may be used. Messages could include for example flag data recognisable by the link selectors and instructing them to begin decoding.

## Claims

1. A method for bi-directional communication between physically separate electronic circuits, or modules, characterised in that the standard link INMOS links (1,2) provided by a transputer are used as communication paths between the separate circuits such that there is essentially a two wire connection between each circuit or module.

2. Apparatus for providing bi-directional communication between a plurality of transputers ($T_l$-$T_n$), characterised by; a two wire bus (1,2); connections via respective buffers (6,7) between each wire of the bus and respective ones of respective INMOS link connections of one pair of INMOS links of each transputer; and decoding means (5) at each transputer adapted to compare at least part of any data present on the bus with a known address of that transputer and, if the address received is that of the transputer, to enable the buffers to allow the transputer to transmit and receive data.

3. Apparatus as claimed in claim 2 wherein each transputer forms part of a physically separate electronic circuit or module.

4. Apparatus as claimed in claim 2 or claim 3 wherein the decoding means comprises a link adapter (8) arranged to convert data from serial form into parallel form and a comparator (9) arranged to compare the parallel data from the link adapter with a known system address for that transputer.

5. Apparatus as claimed in any of claims 2 to 4 and further including a timing line (12) upon which signals instructing the decoding means to begin decoding part of a message may be applied.

Fig. I.

0 260 793

TIMING SIGNAL

EVENT
REQ

TRANSPUTER

4

EVENT
ACK

OUT          IN

7              6

9
DECODER

8 BIT PARALLEL

LINK
ADAPTOR          8

10

11

SERIAL

2 WIRE BUS

FIG.2.